# EUROPÄISCHE PATENTANMELDUNG

(11) **EP 0 749 228 A2**
(43) Veröffentlichungstag der Anmeldung: **18.12.1996**
(21) Anmeldenummer: 96105396.4
(22) Anmeldetag: 04.04.1996
(51) Int. Cl.: H04M 3/42

(54) **Schaltungsanordnung zur Steuerung der Verarbeitung eines ankommenden Anrufs**

(30) Priorität: 14.06.1995 DE 29509506 U
(71) Anmelder: Wasenitz, Marion, 81679 München (DE)
(72) Erfinder: Wasenitz, Marion, 81679 München (DE)

(57) **Zusammenfassung**

Eine Schaltungsanordnung, insbesondere zur Anrufweiterleitung oder Konferenzbildung in Vermittlungsanlagen mit Vermittlungsstellen, die die Rufnummer eines rufenden Anschlusses zu einem gerufenen Anschluß übertragen können, weist beim Teilnehmer eine Steuerschaltung auf, die die übertragene Rufnummer des rufenden Teilnehmers mit wenigstens einer vorbestimmten Rufnummer vergleicht und die unter Ansprechen auf das Vergleichsergebnis die Verarbeitung des ankommenden Anrufs steuert.

## Beschreibung

Die Erfindung betrifft eine Schaltungsanordnung, insbesondere zur Anrufweiterleitung oder Konferenzbildung in Vermittlungsanlagen mit Vermittlungsstellen nach dem Oberbegriff des Anspruchs 1.

Für Fernsprechteilnehmer, die an programmgesteuerte Vermittlungsstellen angeschlossen sind, besteht die Möglichkeit, in der Vermittlungsstelle programmgesteuert eine vom Teilnehmer gewünschte Anrufweiterschaltung oder Konferenzbildung zu ermöglichen. Gleiches gilt für ISDN-Vermittlungsstellen. Der Teilnehmer kann in beiden Fällen zur Verwirklichung des Merkmals "Anrufweiterleitung" oder "Dreierkonferenz" nach Wahl eines vereinbarten Code die jeweilige Rufnummer eingeben, zu der eintreffende Anrufe weitergeleitet werden sollen bzw. die Rufnummer eines Teilnehmers, der in eine Dreierkonferenz einbezogen werden soll. Eine Anrufweiterleitung ist sowohl im geschäftlichen Bereich vorteilhaft, beispielsweise wenn ein Geschäftsmann auch auf einer ausgedehnten Reise immer erreichbar bleiben will, als auch im privaten Bereich, beispielsweise um zu vermeiden, daß man wegen eines erwarteten Anrufs nicht das Haus verlassen kann.

Aus der DE-GM-9405302 ist eine Schaltungsanordnung offenhart, die es erlaubt, eine Anrufweiterleitung oder eine Konferenzbildung in Fernsprechanlagen auch von einem entfernten, beliebigen Anschluß aus einleiten zu können. Der Inhalt dieser Schrift ist hiermit ausdrücklich mit aufgenommen.
Den bekannten Schaltungsanordnungen haftet jedoch der Mangel an, daß alle ankommenden Anrufe zu einer vorprogrammierten Rufnummer weitergeleitet werden, auch wenn dies vom Teilnehmer nicht gewünscht wird.

Der Erfindung liegt daher die Aufgabe zugrunde, die bekannte Schaltungsanordnung derart weiterzubilden, daß sie auf ankommende Anrufe dynamisch reagieren kann.

Die Lösung dieses technischen Problems ist in Anspruch 1 angegeben.

Die Schaltungsanordnung nach der Erfindung geht davon aus, daß an einem analogen Anschluß oder einem ISDN-Anschluß die Dienstmerkmale Anrufweiterschaltung, Makeln/Dreier-Konferenz und die Calling-Line-Identification (Caller-ID, d.h. die Rufnummer des rufenden Teilnehmers wird erkannt angezeigt; zur Verfügung stehen.

Die Erfindung zeichnet sich nunmehr dadurch aus, daß beim Teilnehmer eine Steuerschaltung vorgesehen ist, die die Rufnummer eines rufenden Teilnehmers mit wenigstens einer vorbestimmten, gespeicherte Rufnummer eines Teilnehmers vergleicht und unter Ansprechen auf dieses Vergleichsergebnis die Verarbeitung des ankommenden Anrufs steuert. Zur Speicherung von vorbestimmten Rufnummern ist ein Speicher angeordnet, der je nach Wunsch vom Teilnehmer programmiert werden kann. So können beispielsweise in dem Speicher die Rufnummern der Teilnehmer abgelegt werden, deren Anrufe an die zuvor eingegebene Rufnummer weitergeschaltet werden sollen. Mit anderen Worten vergleicht die Steuerschaltung die Rufnummer eines ankommenden Anrufs mit den im Speicher abgelegten, vorbestimmten Rufnummern, wobei der ankommenden Anruf nur dann weitergeschaltet wird, wenn die Rufnummer des rufenden Teilnehmers in dem Speicher zuvor abgelegt worden ist. Alle Anrufe, die nicht in dem Speicher abgelegt sind, werden von der Steuerschaltung nicht bearbeitet. Ein weiteres Beispiel sieht vor, als Rufnummern nur diejenigen Rufnummern in dem Speicher abzulegen, deren Anrufe durch die Steuereinrichtung beantwortet, aber nicht wetergeleitet werden sollen. Die Anrufe nicht abgelegter Rufnummern können beispielsweise zu einer vorher eingegebenen Rufnummer weitergeleitet oder aber von. System zurückgewiesen werden, je nach dem welcher Zustand in der Steuerschaltung vorher eingestellt worden ist.

Die Steuerschaltung ist zweckmäßigerweise derart ausgebildet, daß sie unter Ansprechen auf ein vom Teilnehmer eingegebenes Codesignal in den programmierzustand übergeht, in dem der Teilnehmer bestimmte Rufnummern in dem Speicher ablegen und den Betriebszustand der Steuerschaltung voreinstellen kann. Wie bereits oben erwähnt, bestimmt der voreingestellte Zustand, ob Anrufe, die einer gespeicherten Rufnummer zugeordnet sind, von der Steuerschaltung direkt beantwortet, weitergeleitet, überhaupt nicht berücksichtigt oder in jeder denkbaren Art und Weise verarbeitet werden. Dazu ist es nicht erforderlich, daß die Vermittlungsanlagen über eine Anrufweiterleitungs- und/oder Dreier-Konferenzfunktion verfügen müssen.

Vorteilhafterweise kann die Programmierung der Steuerschaltung auch von einem entfernten, beliebigen Teilnehmeranschluß aus erfolgen. Dies erfolgt dadurch, daß der Teilnehmer ein bestimmtes Codesignal zu seiner Steuerschaltung schickt, durch den die Steuerschaltung in ihren Programmierzustand versetzt wird. Anschließend können die zu speichernden Rufnummern sowie der Zustand der Steuerschaltung eingegeben werden. Um die Steuerschaltung vor unbefugten Zugriffen zu schützen, enthält die Steuerschaltung eine Schaltung zur Erkennung eines eingegebenen Paßwortes. Die Steuerschaltung läßt sich nur dann programmieren, wenn das richtige Paßwort eingegeben worden ist.

Damit sich der Teilnehmer über die aktuellen Rufnummern und den aktuellen Zustand der Steuerschaltung informieren kann, enthält die Steuerschaltung ferner eine Schaltung, die unter Ansprechen auf von dem entfernten Teilnehmeranschluß übertragene Abfragesignale die jeweiligen Informationen zum entfernten Teilnehmeranschluß zurückgibt. Ferner ist eine sprach-Ausgabeeinrichtung vorgesehen, die beispielsweise die aktuell programmierten Einstellungen akustisch dem Teilnehmer bestätigt. Eine Aufzeichnungseinrichtung in Form eines Logbuchs dient dazu, alle von einer Vermittlungsstelle gesendeten Informationen sowie den voreingestellten Zustand der Steuerschaltung aufzuzeichnen. Der Inhalt des "Logbuchs" kann vom Teilnehmer abgerufen werden. Der Komfort der Schaltungsanordnung wird weiter dadurch erhöht, daß ein Display installiert ist, das den Status der Steuerschaltung und weitere Informationen über den aktuellen Anruf anzeigt. Die Steuerschaltung kann jeweils in einer Teilnehmerendeinrichtung, beispielsweise einem Telefonapparat, einem Anrufbeantworter, einem PC oder einer TK-Anlage integriert sein. Eine andere Möglichkeit besteht darin, daß die Steuerschaltung in Form eines getrennten Gerätes verwirktlicht ist, das am Teilnehmeranschluß an die Anschlußleitung bzw. Leitungen bzw. den ISDN-Anschluß anschaltbar ist.

Nach einem weiteren Merkmal kann die Steuerschaltung einen Anrufbeantworter aufweisen, der ankommende Gespräche beantworten soll, sofern sich die Steuerschaltung in einem Zustand befindet, in dem die einer gespeicherten Rufnummer zugeordneten Anrufe direkt durch die Steuerschaltung beantwortet werden sollen. Auf diese Weise wird verhindert, daß Anrufe, die nicht innerhalb einer bestimmten Zeitspanne von dem Teilnehmer selbst angenommen werden, verloren gehen.

Die Erfindung wird nachfolgend anhand zweier Ausführungsbeispiele in Verbindung mit den beiliegenden Zeichnungen näher erläutert. Es zeigen:
- Fig. 1: das Blockschaltbild einer Steuerschaltung nach der Erfindung zur Anschaltung an eine analoge Anschlußleitung, und
- Fig. 2: eine Steuerschaltung nach der Erfindung zur Anschaltung an einen ISDN-Basisanschluß.

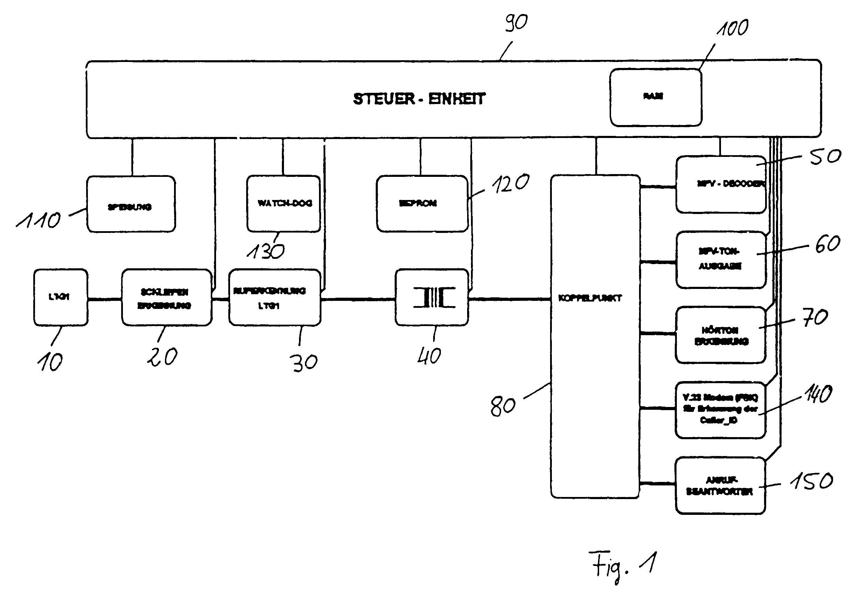

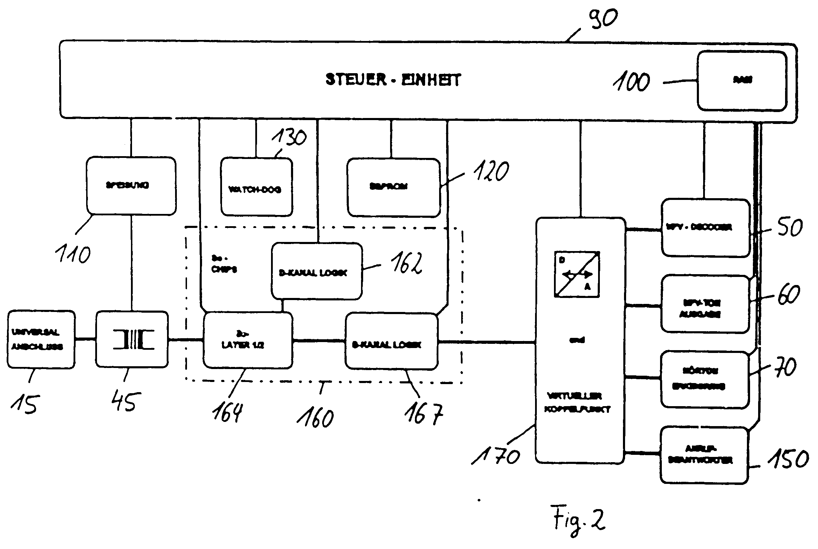

Die Steuerschaltung gemäß Fig. 1 ist an eine analoge Anschlußleitungen 10 einer programmgesteuerten Vermittlungsstelle (ANIS-Vermittlungsstelle) - die hier nicht dargestellt ist - angeschlossen. Wenn die Steuerschaltung als getrenntes Gerät ausgeführt ist, kann die Anschaltung beispielsweise über normale N-codierte TAE-Stecker (nicht dargestellt) erfolgen. Eine Schleifenerkennungsschaltung 20 ermöglicht die Feststellung des Schleifenzustandes in üblicher Weise. Eine Ruferkennungsschaltung 30 dient dazu, die übertragenen Codesignale zur Einstellung der Leistungsmerkmale "Dreierkonferenz" oder "Anrufweiterleitung" zu erkennen. Zur Potentialtrennung folgt dann ein Übertrager 40 ebenfalls üblicher Art. Die Erkennungsschaltung 30 ist zusammen mit einer Mehrfrequenz-Decodierschaltung 50 sowie einer Mehrfrequenz-Tonausgabeschaltung 60 und einer Hörton-Erkennungsschaltung 70, die alle üblicher Bauart sind, an einen Koppler oder Koppelpunkt 20 angeschlossen, der die Herstellung von Verbindungen zwischen den letztgenannten Schaltungen ermöglicht. In einem Schreib-Lese-Speicher (RAM) 100 können die Rufnummern abgelegt werden, die erfindungsgemäß zur Steuerung ankommender Anrufe benutzt werden, wie dies nachfolgend noch ausführlilch erläutert wird. Es sei beispielsweise angenommen, daß der Teilnehmeranschluß neben dem Leistungsmerkaml "Calling Line Identification" (Caller-ID), d.h. die Steuerschaltung muß in der Lage sein, die von einer zugeordneten Vermittlungsstelle übertragene Rufnummer eines ankommenden Anrufs zu erkennen, auch über die Merkamle Anrufweiterleitung und Dreier-Konferenzschaltung verfügt. Diese Aufgabe übernimmt bei einem analogen Teilnehmeranschluß ein FSK-Modem 140. Bei einem digitalen ISDN-Anschluß erfogt die Rufnumernerkennung in einer D-Kanal-Logik 162, die in Fig. 2 gezeigt ist. Sollen bestimmte Anrufe direkt am Teilnehmeranschluß beantwortet werden, so kann ein Anrufbeantworter 150 vorgesehen sein, damit Anrufe nicht verloren gehen, wenn der Teilnehmer nicht selbst innerhalb einer vorgegebenen Zeitspanne (15 s)den Anruf annehmen kann.

Die Gesamtsteuerung erfolgt durch eine Steuereinheit 90, die einen Mikroprozessor und zugeordnete Bauteile bekannter Art enthält. Hiervon sind nur die Speiseschaltung 110, ein EEPROM-Speicher 120 und eine Überwachungsschaltung 130 in Form eines sogenannten "Watch-Dog" dargestellt. Auch diese Bauteile sind bekannt.

Die Funktionsweise der erfindungsgemäßen Schaltungsanordnung wird nunmehr erläutert. Es sei beispielsweise an genommen, daß die Anrufweiterleitung aktiviert ist.

Die Einstellung dieses Leistungsmerksmals kann von einem lokalen oder von einem beliebigen, entfernten Anschluß aus vorgenommen werden, wie dies ausführlich in der DE-GM-9405302 beschrieben ist. In dieser Phase sorgt die Steuerschaltung dafür, daß alle ankommenden Anrufe zu einer vorprogrammierten Rufnummer weitergeleitet werden. In diesem Fall sollen aber nicht alle Anrufe weitergeleitet werden, sondern nur die Anrufe, deren Rufnummern in dem Speicher 100 abgelegt sind. Um die Rufnummern zu speichern, kann der Teilnehmer an seinem oder einem beliebigen, entfernten Anschluß ein Codesignal eingeben, das die Steuerschaltung in ihren Programmierungszusatand versetzt. Jetzt kann der Teilnehmer bestimmte Rufnummern in den Speicher eingeben und einen Betriebszustand für die Steuerschaltung voreinstellen, infolge dessen die Verarbeitung der zu den gespeicherten Rufnummern gehörenden Anrufe gesteuert wird. Die Steuer-Einheit 90 vergleicht dazu die übertragene Rufnummer eines ankommenden Anrufs mit den im Speicher 100 abgelegten Rufnummern und führt beispielsweise folgende Steuerfunktionen durch:
1. Ein Anruf, dessen Rufnummer mit einer gespeicherten Rufnummer übereinstimmt, wird nur beantwortet (vom Teilnehmer selbst oder vom Anrufbeantwortet 150) und nicht weitergeleitet. Alle übrigen Anrufe mit nicht übereinstimmender Rufnummer werden nicht beantwortet und nach 15 s weitergeschaltet.
2. Ein Anruf, dessen Rufnummer mit einer gespeicherten Rufnummer übereinstimmt, wird nicht beantwortet und somit nach 15 s weitergeschaltet. Alle übrigen Anrufe werden direkt am Teilnehmeranschluß beantwortet.
3. Ein Anruf, dessen Rufnummer mit einer gespeicherten Rufnummer übereinstimmt, wird am Teilnehmeranschluß beantwortet und die Steuerschaltung schaltet nach Empfang eines Identifikationsignals in den Programmiermodus.
4. Anrufe mit nicht übereinstimmenden Rufnummern werden überhaupt nicht berücksichtigt.
Viele weitere Steuerfunktionen zur Verarbeitung eines ankommenden Anrufs sind denkbar, ohne daß der Teilnehmeranschluß über die Leistungsmerkamle Anrufweiterleitung und/oder Dreier-Konferenz verfügen muß.

Fig. 2 zeigt ein Ausführungsbeispiel der Erfindung, bei der die Steuerschaltung mit einem ISDN-Anschluß 15 verbunden ist. Soweit die Bauteile mit dem Ausführungsbeispiel gemäß Fig. 1 übereinstimmen, werden gleiche Bezugszeichen verwendet. Zur Erläuterung dieser Bezugszeichen wird auf die Beschreibung der Fig. 1 verwiesen. Die Steuerschaltung gemäß Fig. 1 wird an einem sogenannten ISDN-Universalanschluß 15 üblicher Art betrieben. Es folgt ein Übertrager 45 und eine gestrichelt umrahmte S₀-Anschlußeinheit 160, die in bekannter Weise eine D-Kanallogik 162, eine S₀-Layer 1/2 164 und eine B-Kanallogik 167 enthält. Am Ausgang der B-Kanallogik 167 steht ein B-Kanal zur Verfügung, der zu einem Schaltungsblock 170 mit einem Digital-Analog- bzw. Analog-Digital-Wandler und einen virtuellen Koppelpunkt enthält. An den Schaltungsblock 170 sind wiederum ein Mehrfrequenz-Decoder 50, Mehrfrequenz-Tonausgabeschaltung 60, eine Hörton-Erkennungssshaltung 70 und ein Anrufbeantworter 150 angeschlossen.

Die Arbeitsweise der Schaltungsanordnung nach Fig. 2 entspricht der Arbeitsweise der Schaltungsanordnung gemäß Fig. 1. Auch hier steht am ISDN-Anschluß neben dem Leistungsmerkmal Dreier-Konferenz oder Anrufweiterleitung das Merkmal Caller-ID zur Verfügung, mit dem die Rufnummer eines ankommenden Anrufs erkannt werden kann. Die Rufnummer wird beispielsweise im D-Kanal, d.h.dem ISDN-Steuerkanal, übertragen und von der D-Kanal-Schaltung 167 analysiert. Die erkannte Rufnummer wird einem Komparator (nicht dargestellt) zugeführt, der sie anschließend mit den im Speicher 100 abgelegten Rufnummern vergleicht. Aufgrund des Vergleichsergebnisses und eines voreingestellten Betriebazustandes für die Steuerschaltung wird ein ankommender Anruf entsprechend dem analogen Ausführungsbeispiel nach Fig.1 abgewickelt. Eine weitere Steuerfunktion für einen ankommenden Anruf besteht darin einen Anruf, dessen Rufnummer mit einer gespeicherten Rufnummer übereinstimmt, direkt am Teilnehmeranschluß zu beantworten und mit Hilfe der Dreier-Konferenzschaltung weiterzuleiten.

## Patentansprüche

1. Schaltungsanordnung, insbesondere zur Anrufweiterleitung oder Konferenzbildung in Vermittlungsanlagen mit Vermittlungsstellen, die die Rufnummer eines rufenden Anschlusse zu einem gerufenen Anschluß übertragen können dadurch gekennzeichnet,
daß beim Teilnehmer eine Steuerschaltung vorgesehen ist, die die übertragene Rufnummer des rufenden Teilnehmers mit wenigstens einer vorbestimmten Rufnummer vergleicht und unter Ansprechen auf das Vergleichsergebnis die Verarbeitung des ankommenden Anrufs steuert.

2. Schaltungsanordnung nach Anspruch 1, gekennzeichnet durch einen Speicher (100), der zum vorübergehenden Ablegen wenigstens einer vorbestimmten Rufnummer ausgebildet ist, und durch einen Komparator zum Vergleichen der gespeicherten Rufnummern mit der einem ankommenden Anruf zugeordneten Rufnummer.

3. Schaltungsanordnung nach Anspruch 1 oder 2, dadurch gekennzeichnet, daß die Steuerschaltung auf das Vergleichsergebnis und einen voreingestellten Zustand anspricht, um den ankommenden Anruf zu steuern.

4. Schaltungsanordnung nach einem der Ansprüche 1 bis 3, dadurch gekennzeichnet, daß die Steuerschaltung die Rufnummer aus dem ISDN-Steuerkanal (D-Kanal) gewinnt oder über eine analoge Teilnehmer-Anschlußleitung empfängt.

5. Schaltungsanordnung nah einem der Ansprüche 1 bis 4, dadurch gekennzeichnet, daß die Steuerschaltung unter Ansprechen auf ein Codesignal in den Programmierungszustand übergeht.

6. Schaltungsanordnung nach Anspruch 5, dadurch gekennzeichnet, daß die Steuerschaltung von einem örtlichen oder entfernten, beliebigen Teilnehmeranschluß aus programmierbar ist.

7. Schaltungsanordnung nach Anspruch 5 oder 6, dadurch gekennzeichnet, daß die Steuerschaltung eine Schaltung zur Erkennung eines eingegebenen Paßwortes enthält und nur bei richtigem Paßwort in Tätigkeit tritt.

8. Schaltungsanordnung nach Anspruch 6 oder 7, dadurch gekennzeichnet, daß die Steuerschaltung eine Schaltung enthält, die unter Ansprechen auf von dem entfernten Teilnehmeranschluß übertragene Abfragesignale die jeweilige Einstellung der Steuerschaltung und die gespeicherten Rufnummern zum entfernten Teilnehmeranschluß zurückgibt.

9. Schaltungsanordnung nach einem der Ansprüche 1 bis 8, gekennzeichnet durch eine Sprach-Ausgabeeinrichtung, die den aktuellen programmierten Zustand der Steuerschaltung akustisch bestätigt.

10. Schaltungsanordnung nach einem der Ansprüche 1 bis 9, gekennzeichnet durch eine Aufzeichnungseinrichtung, in die sämtliche Informationen über einen ankommenden Anruf eintragbar sind und die vom Teilnehmer abrufbar ist.

11. Schaltungsanordnung nach einem der Ansprüche 1 bis 10, gekennzeichnet durch eine Anzeigeeinrichtung, die den Status der Steuerschaltung und Informationen über den aktuellen Anruf anzeigt.

12. Schaltungsanordnung nach einem der Ansprüche 1 bis 11, dadurch gekennzeichnet, daß die Steuerschaltung in Form eines getrennten Gerätes verwirklicht oder in einer Endeinrichtung integrierbar ist.

13. Schaltungsanordnung nach einem der Ansprüche 1 bis 12, dadurch gekennzeichnet, daß die Steuerschaltung wenigstens eine Schaltung (20) zur Schleifenerkennung, eine Schaltung (30) zur Ruferkennung, Schaltungen zur Mehrfrequenz-Tondecodierung (50), zur Mehrfrequenz-Tonausgabe (60) und zur Hörtonerkennung (70), einen Koppelpunkt (80; 170) zur Verbindung der Schaltungen mit der bzw. den Anschlußleitungen, einen Mikroprozessor mit zugeordneten Bauteilen zur Speicherprogramm-Steuerung aller Bauteile sowie einen Anrufbeantworter (150) aufweist.
